# EUROPÄISCHE PATENTSCHRIFT

(11) **EP 2 478 740 B1**
(45) Veröffentlichungstag und Bekanntmachung des Hinweises auf die Patenterteilung: **13.04.2016**
(21) Anmeldenummer: 10754518.8
(22) Anmeldetag: 17.09.2010
(51) Int. Cl.: H04W 74/02

(54) **GEMEINSAME NUTZUNG VON ZEITSCHLITZEN**
TIMESLOT SHARING
PARTAGE D'INTERVALLE DE TEMPS

(30) Priorität: 18.09.2009 DE 102009041834
(43) Veröffentlichungstag der Anmeldung: 25.07.2012
(73) Patentinhaber: Phoenix Contact GmbH & Co. KG, 32826 Blomberg (DE)
(72) Erfinder: HAKEMEYER, Frank, 32805 Horn-Bad Meinberg (DE); FRÖSE, Vladimir, 32547 Bad Oeynhausen (DE); STEMME, Maik, 31749 Auetal (DE); WITTE, Stefan, 32425 Minden (DE)
(74) Vertreter: Michalski Hüttermann & Partner Patentanwälte mbB
(86) Internationale Anmeldenummer: PCT/EP2010/063726
(87) Internationale Veröffentlichungsnummer: WO 2011/033081

(56) Entgegenhaltungen:
- US-B1- 7 558 238
- MICHAEL BAHR ET AL: "Shared Group Timeslots", PROJECT: IEEE P802.15 WORKING GROUP FOR WIRELESS PERSONAL AREA NETWORKS (WPANS),, [Online] Nr. IEEE 802.15-08/0827r0, 10. November 2008 (2008-11-10), Seiten 1-11, XP002578935, Gefunden im Internet: URL:https://mentor.ieee.org/802.15/documen ts> [gefunden am 2010-04-20]
- BERLEMANN, L. AND HIERTZ, G. AND WALKE, B.: "Reservation-based Spectrum Load Smoothing as Cognitive Medium Access for Spectrum Sharing Wireless Networks", PROCEEDINGS OF EUROPEAN WIRELESS CONFERENCE 2005, 13. April 2005 (2005-04-13), Seiten 547-553, XP002610170, Nicosia, Cyprus ISBN: 3-8007-2886-9 Gefunden im Internet: URL:http://www.comnets.rwth-aachen.de/publ ications/complete-lists/abstracts/2005/beh iwa-ew05.html [gefunden am 2010-11-17]

## Beschreibung

Die Erfindung betrifft ein Netzwerk, das mindestens einen ersten Teilnehmer und mindestens zwei mit dem ersten Teilnehmer über eine Nachrichtenübertragungseinrichtung verbundene zweite Teilnehmer umfasst.

Derartige Netzwerke sind bekannt. Des Weiteren ist es bekannt, ein derartiges Netzwerk als logische "Baumstruktur" (tree structure) zu strukturieren. Bei einer Baumstruktur steht ein Teilnehmer an der Spitze, die übrigen Teilnehmer sind an den Verzweigungen oder an den Enden der Baumstruktur angeordnet.

Je nach Funktion des Teilnehmers unterscheidet man zwischen "Master", "Repeater-Slave" und "Slave". Der "Master"-Teilnehmer bildet den zentralen Punkt des Netzwerkes. Initialisierung des Netzwerkes und netzwerksspezifische Funktionen werden üblicherweise über den Master geregelt. Ohne einen Master kann das Netzwerk nicht funktionieren. Ein Repeater-Teilnehmer kann Nachrichten zwischen mit dem Repeater-Slave verbundenen Teilnehmern weiterleiten. Ein Slave-Teilnehmer bildet einen Endpunkt des Netzwerkes. Eine Verbindung in Richtung des Masters bezeichnet man als "Uplink", eine Verbindung vom Master weg als "Downlink". Ein Repeater-Slave-Teilnehmer, der mehrere Downlinks aufweist, wird als "Parent" bezeichnet. Die Teilnehmer, die mit dem Repeater-Slave-Teilnehmer über diese Downlinks direkt verbunden sind, werden als "Children" bezeichnet. In einem als Baumstruktur ausgebildeten Netzwerk steht der "Master"-Teilnehmer an der Spitze des Netzwerkes.

Bei vielen Netzwerken, insbesondere bei Funknetzwerken, wird mit einem Polling-Verfahren gearbeitet. Das Polling-Verfahren ist ein Zugriffsverfahren, bei dem der Master-Teilnehmer die mit ihm verbundenen weiteren Teilnehmer des Netzwerkes der Reihe nach abfragt, ob diese senden wollen. Das heißt, der Master "pollt" nach und nach alle Teilnehmer an und tauscht dabei im Punkt-zu-Punkt-Betrieb Nachrichten mit dem angepollten Teilnehmer aus.

Das Polling-Verfahren verfügt zu einem Zeitpunkt immer nur über eine einzelne Kommunikation zwischen dem Master und einem weiteren Teilnehmer des Netzwerkes. Nachteilig hieran ist, dass ein zufällig auftretendes Ereignis bei einem Teilnehmer erst sehr stark verzögert an den Master weitergeleitet werden kann. Insbesondere dann, wenn der Master gerade eben zuvor mit diesem Teilnehmer kommuniziert hat, kann die Verzögerung einen kompletten Polling-Zyklus ausmachen.

Vorteilhaft an dem Polling-Verfahren ist, dass der Master solange mit einem Teilnehmer kommunizieren kann, wie zum Austausch von vorliegenden Daten benötigt wird. Sind viele Daten auszutauschen, verlängert sich die Kommunikationszeit, sind nur wenige Daten vorhanden, verkürzt sich die Kommunikationszeit. Ein weiterer Vorteil des Polling-Verfahrens ist, dass es einfach zu implementieren ist, da es nahezu keinen Protokoll-Overhead erzeugt, das heißt, die Protokoll-bedingten Zusatzinformationen besitzen nur einen geringen Umfang. Letztere Eigenschaft macht das Polling-Verfahren insbesondere interessant für Funknetzwerke.

Des Weiteren sind Netzwerke bekannt, die mit sogenannten "Fixed Assigned Protocols" arbeiten. Bei solchen Protokollen ist die Kommunikation zwischen den Teilnehmern des Netzwerkes fest definiert. Es gibt zeitgesteuerte Protokolle, wie beispielsweise TDMA (Time Division Multiple Access) oder TSMP (Time Synchronised Mesh Protocols). In Netzwerken, die mit derartigen Protokollen eingerichtet sind, bekommt jeder Teilnehmer einen festen Zeitschlitz (slot) zugewiesen, in dem er für eine festgelegte Dauer senden darf. Solche Protokolle haben den Vorteil, dass sie deterministisch sind. Es können klare Aussagen getroffen werden, wann beispielsweise das gesamte Netzwerk einmal Daten ausgetauscht hat. Nachteilig hingegen ist, dass bei zufällig auftretenden Ereignissen diese nur verzögert weitergegeben werden können, da ein Ereignis bei einem Teilnehmer erst im nächsten, dem Teilnehmer zugewiesenen Zeitschlitz kommuniziert werden kann.

Des Weiteren sind Netzwerke bekannt, die Ereignisgesteuerte Protokolle, auch "Random Access Protocols" genannt, verwenden. Bei der CAN (Controller Area Network) - Bus-Technik versuchen die Teilnehmer das Medium "Bus" immer dann zu nutzen, wenn beim Teilnehmer ein Ereignis, beispielsweise eine zustandsänderung, eingetreten ist. Da das Auftreten der Ereignisse nicht planbar ist, sind Mechanismen vorgesehen, die ein zeitgleiches Beanspruchen des Busses durch mehrere Teilnehmer verhindern. Ein Beispiel hierfür ist das CSMA (Carrier Sense Multiple Access)-Verfahren, bei dem das Medium zunächst auf Verfügbarkeit überprüft wird und schließlich, wenn die Verfügbarkeit festgestellt ist, benutzt wird.

Nachteilig bei den Ereignis-gesteuerten Protokollen ist, dass hohe Verzögerungszeiten für den Austausch von Nachrichten zwischen den Teilnehmern möglich sind, insbesondere bei höherer Auslastung des Netzwerkes.

Aus dem Dokument mit dem Titel "Shared Group Timeslots" von Michael Bahr et. al., Project: IEEE P802.15 working group for wireless personal area networks (WPANS), Nr. IEEE 802.15-08/0827r0 ist ein Funknetzwerk mit einem gemeinsamen Gruppenzeitschlitz bekannt, wobei nicht genutzte Ressourcen von verschiedenen Teilnehmern genutzt werden können.

Der Erfindung liegt die Aufgabe zugrunde, ein Netzwerk zu schaffen, das einerseits eine zeitlich vorhersagbare oder berechenbare Kommunikation zwischen den Teilnehmern ermöglicht, und andererseits die Möglichkeit einer schnellen Übertragung von einem bei einem Teilnehmer auftretenden Ereignis bietet.

Diese Aufgabe wird durch ein Netzwerk gemäß dem unabhängigen Anspruch 1 gelöst. Vorteilhafte Ausgestaltungen der Erfindung sind in den Unteransprüchen angegeben.

Das erfindungsgemäße Netzwerk umfasst mindestens einen ersten Teilnehmer und mindestens zwei mit dem ersten Teilnehmer über eine Nachrichtenübertragungseinrichtung verbundene zweite Teilnehmer, wobei das Netzwerk derart eingerichtet ist, dass eine Kommunikation zwischen dem ersten Teilnehmer und den zweiten Teilnehmern in einem Kommunikationszeitschlitz erfolgt und der erste Teilnehmer die mindestens zwei zweiten Teilnehmer gemäß eines Polling-Verfahrens kontaktiert und die mindestens zwei zweiten Teilnehmer in einem festgelegten zeitlichen Abstand, der den Kommunikationszeitschlitz definiert, pollt, wobei in dem Kommunikationszeitschlitz Daten zwischen dem ersten Teilnehmer und den zweiten Teilnehmern übertragbar sind, wobei der Kommunikationszeitschlitz mindestens einen ersten Nachrichtenzeitschlitz und einen zweiten Nachrichtenzeitschlitz aufweist, wobei der erste Nachrichtenzeitschlitz durch einen ausgewählten zweiten Teilnehmer zum Übertragen einer Nachricht an den ersten Teilnehmer nutzbar ist und der zweite Nachrichtenzeitschlitz von mehreren zweiten Teilnehmern zum Übertragen einer Nachricht an den ersten Teilnehmer nutzbar ist.

Unter einer "Nachricht" ist im Rahmen der Erfindung eine begrenzte Menge an Daten zu verstehen. Eine Nachricht kann insbesondere ein Datenpaket sein.

Der erste Nachrichtenzeitschlitz des Kommunikationszeitschlitzes ist jeweils einem bestimmten zweiten Teilnehmer zugeordnet. Nur dieser bestimmte zweite Teilnehmer kann den ersten Nachrichtenzeitschlitz nutzen, um eine Nachricht an den ersten Teilnehmer zu übertragen. Dies ermöglicht es, beispielsweise durch das Festlegen einer Reihenfolge, das innerhalb eines Zykluses von mehreren Kommunikationszeitschlitzen sämtliche zweite Teilnehmer die Möglichkeit hatten, innerhalb eines Kommunikationszeitschlitzes eine Nachricht an den ersten Teilnehmer zu übertragen. Dies ermöglicht es, vorherzusagen oder zu berechnen, nach welcher Zeit eine Nachricht von einem zweiten Teilnehmer an den ersten Teilnehmer weitergegeben wird.

Der zweite Nachrichtenzeitschlitz eines Kommunikationszeitschlitzes ist von mehreren der zweiten Teilnehmer für die Übertragung einer Nachricht an den ersten Teilnehmer nutzbar. Im Gegensatz zu dem ersten Nachrichtenzeitschlitz ist der zweite Nachrichtenzeitschlitz nicht für einen ausgewählten zweiten Teilnehmer reserviert. Der zweite Nachrichtenzeitschlitz ermöglicht es, ein Ereignis, das bei einem der zweiten Teilnehmer aufgetreten ist, in Form einer Nachricht an den ersten Teilnehmer zu übertragen, ohne dass dieser zweite Teilnehmer warten muss, bis für ihn ein erster Nachrichtenzeitschlitz nutzbar ist. Auf diese Weise wird ermöglicht, bei den zweiten Teilnehmern auftretende Ereignisse innerhalb kurzer Zeit in Form einer Nachricht an den ersten Teilnehmer weiterzugeben.

In einer vorteilhaften Ausgestaltung der Erfindung ist das Netzwerk derart eingerichtet, dass der erste Teilnehmer dem zweiten Teilnehmer bestätigt, dass eine vom zweiten Teilnehmer an den ersten Teilnehmer im zweiten Nachrichtenschlitz übertragene Nachricht vom ersten Teilnehmer empfangen wurde. Dies ermöglicht es dem zweiten Teilnehmer festzustellen, ob seine Nachricht erfolgreich weitergeleitet wurde, oder aber ob ein Weiterleiten dieser Nachricht nicht stattgefunden hat. Das Übertragen der Nachricht kann zum Beispiel deswegen nicht gelungen sein, weil ein weiterer zweiter Teilnehmer ebenfalls den zweiten Nachrichtenzeitschlitz für die Übertragung einer Nachricht genutzt hat.

Eine weitere vorteilhafte Ausgestaltung der Erfindung sieht vor, dass der zweite Teilnehmer, der keine Bestätigung erhalten hat, dass seine im zweiten Nachrichtenzeitschlitz übertragene Nachricht vom ersten Teilnehmer empfangen wurde, erneut versucht, die Nachricht in dem zweiten Nachrichtenschlitz eines direkt oder später folgenden Kommunikationszeitschlitzes zu übertragen.

Der erste Teilnehmer kann insbesondere ein Master-Teilnehmer, die zweiten Teilnehmer mit dem Master-Teilnehmer verbundene Slave-Teilnehmer und/oder Repeater-Slave-Teilnehmer sein. Ebenfalls ist es möglich, dass der erste Teilnehmer ein Parent-Teilnehmer ist, und die mehreren zweiten Teilnehmer Child-Teilnehmer dieses Parent-Teilnehmers sind.

Nachfolgend wird die Erfindung unter Bezugnahme auf die beigefügten Zeichnungen anhand bevorzugter Ausführungsformen näher erläutert.

Es zeigen
- Fig. 1: eine Struktur einer Ausführungsform eines erfindungsgemäßen Netzwerkes,
- Fig. 2: eine schematische Darstellung eines Kommunikationszeitschlitzes, in dem Nachrichten zwischen Teilnehmern des in Fig. 1 gezeigten Netzwerkes ausgetauscht werden können, und
- Fig. 3: eine schematische Ansicht eines zweiten Kommunikationszeitschlitzes, in dem Nachrichten zwischen Teilnehmern des in Fig. 1 gezeigten Netzwerkes ausgetauscht werden können.

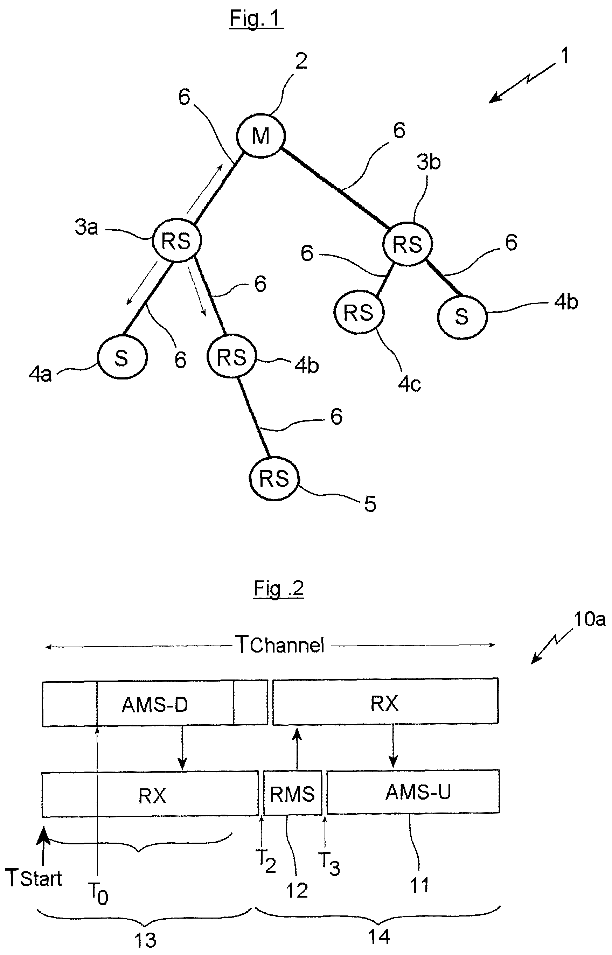

Die Fig. 1 zeigt die Struktur einer Ausführungsform eines erfindungsgemäßen Netzwerkes 1.

Das Netzwerk 1 umfasst mehrere Teilnehmer und ist in Form einer Baumstruktur strukturiert. Die Spitze der Baumstruktur des Netzwerkes 1 bildet ein Master(M)-Teilnehmer 2. Der Master-Teilnehmer 2 ist über eine Nachrichtenübertragungseinrichtung 6 mit zwei Repeater-Slave(RS)-Teilnehmern 3a, 3b verbunden. Der erste Repeater-Slave-Teilnehmer 3a wiederum ist über eine Nachrichtenübertragungseinrichtung 6 mit einem Slave(S)-Teilnehmer 4a und mit einem weiteren Repeater-Slave-Teilnehmer 4b verbunden. Der zweite Repeater-Slave-Teilnehmer 3b ist über eine Nachrichtenübertragungseinrichtung 6 mit einem weiteren Repeater-Slave 4c und einem Slave-Teilnehmer 4d verbunden. Der Repeater-Slave-Teilnehmer 4b ist mit einem weiteren Repeater-Slave-Teilnehmer 5 verbunden.

Der Master-Teilnehmer 2 bildet den zentralen Punkt des Netzwerkes 1. Initialisierung und netzwerksspezifische Funktionen werden durch den Master-Teilnehmer 2 gesteuert. Die Repeater-Slaves 3a, 3b, 4b sind derart eingerichtet, dass diese Nachrichten zwischen den mit Ihnen verbundenen Teilnehmern weiterleiten. Die Slave-Teilnehmer 4a, 4b und der Repeater-Slave-Teilnehmer 5 bilden die Endpunkte des Netzwerkes 1.

Das Netzwerk 1 ist in diesem Ausführungsbeispiel ein Funknetzwerk. Die Teilnehmer des Netzwerkes 1 sind Funkstationen, die Nachrichtenübertragung zwischen den Teilnehmern erfolgt mittels Funkwellen. Die Nachrichtenübertragungseinrichtung 6 ist in diesem Fall ein Medium, welches Funkwellen übertragen kann, insbesondere Luft. Alternativ kann das Netzwerk 1 beispielsweise auch als drahtgebundenes Netzwerk ausgeführt sein. Die Nachrichtenübertragungseinrichtung 6 wird in diesem Fall durch ein oder mehrere Drähte, Leiterbahnen oder Kabel gebildet, die die einzelnen Teilnehmer des Netzwerkes zwecks Austausches von Nachrichten miteinander verbinden.

Das Netzwerk 1 ist derart eingerichtet, dass der Master-Teilnehmer 2 die anderen Teilnehmer des Netzwerkes 1 gemäß einem Polling-Verfahren kontaktiert. Durch die Ausgabe von Polling-Signalen an die mit dem Master-Teilnehmer 2 verbundenen Repeater-Slave-Teilnehmer 3a, 3b veranlasst der Master-Teilnehmer 2 einen Datenaustausch zwischen ihm und dem jeweils angepollten Repeater-Slave-Teilnehmer 3a, 3b. Die Repeater-Slave-Teilnehmer 3a, 3b geben das Polling-Signal des Master-Teilnehmers 2 an den vom Master-Teilnehmer 2 angepollten Endteilnehmer 4a, 5 (über den Repeater-Slave-Teilnehmer 4b), 4c und 4d weiter. Auf diese Weise wird im Rahmen eines Polling-Zyklusses ein Datenaustausch zwischen dem Master-Teilnehmer 2 und den vier Endteilnehmern 4a, 5, 4c und 4d initiiert.

Der Master-Teilnehmer 2 pollt die Endteilnehmer 4a, 5, 4c, 4d in einem festgelegten zeitlichen Abstand T_{channel}. Durch die Festlegung des Abstands T_{channel} arbeitet das gesamte Netzwerk 1 im Sinne eines TDMA-Verfahrens in einem festen Zeitraster. Die ermöglicht es insbesondere, die Reaktionszeit des Netzwerkes 1 vorherzusagen, die sich durch die Anzahl der Endteilnehmer 4a, 5, 4c und 4d bestimmt.

Der zeitliche Abstand T_{channel} definiert einen Kommunikationszeitschlitz, in dem Daten zwischen den Teilnehmern übertragen werden können. Im Betrieb des Netzwerkes 1 schließen sich eine Vielzahl solcher Kommunikationszeitschlitze zeitlich hintereinander an.

Die Fig. 2 zeigt eine erste Ausführungsform eines Kommunikationszeitschlitzes 10a. Der Kommunikationszeitschlitz 10a ist in diesem Ausführungsbeispiel ein Kommunikationszeitschlitz, in dem der Master-Teilnehmer 2 und der Repeater-Slave-Teilnehmer 3a kommunizieren.

Der Kommunikationszeitschlitz 10a unterteilt sich in einen Sendezeitschlitz 13 und in einem Empfangszeitschlitz 14. Im Sendezeitschlitz 13 kann der Master-Teilnehmer 2 eine Nachricht an den Repeater-Slave-Teilnehmer 3a übertragen, wobei der Repeater-Slave-Teilnehmer 3a als Empfänger RX fungiert. Im Empfangszeitschlitz 14 kann der Repeater-Slave-Teilnehmer 3a eine Nachricht an den Master-Teilnehmer 2 übertragen, wobei in diesem Zeitabschnitt der Master-Teilnehmer 2 als Empfänger RX fungiert.

Der Sendezeitschlitz 13 und der Empfangszeitschlitz 14 können sich wiederum in mehrere Zeitschlitze unterteilen. In diesem Ausführungsbeispiel umfasst der Sendezeitschlitz 13 einen Anwendungsnachrichtenzeitschlitz AMS-D (Application Message Slot-Downlink), der ab einem Zeitpunkt T₀ beginnt. Der Zeitpunkt T₀ ist gegenüber dem Beginn des Kommunikationszeitschlitzes 10a T_{Start} verschoben. Der zeitliche Abstand zwischen T_{Start} und T₀ kann beispielsweise für Synchronisierungsvorgänge zwischen den Teilnehmern verwendet werden.

Der Empfangszeitschlitz 14 unterteilt sich in einen ersten Nachrichtenzeitschlitz 11 (AMS-U - Application Message Slot-Uplink) und einen zweiten Nachrichtenschlitz 12 (RMS - Random Message Slot). Der zweite Nachrichtenschlitz 12 beginnt nach Beendigung des Sendezeitschlitzes 13 ab einem Zeitpunkt T₂, anschließend folgt ab einem Zeitpunkt T₃ der erste Nachrichtenzeitschlitz 11. Die Reihenfolge des ersten Nachrichtenschlitzes 11 und des zweiten Nachrichtenschlitzes 12 können auch vertauscht sein.

Der erste Nachrichtenzeitschlitz 11 ist einem Teilnehmer, hier dem Repeater-Slave-Teilnehmer 3a, fest zugewiesen und kann nur durch den Repeater-Slave-Teilnehmer 3a genutzt werden. Der zweite Nachrichtenzeitschlitz 12 hingegen kann sowohl von dem Repeater-Slave-Teilnehmer 3a als auch von dem Repeater-Slave-Teilnehmer 3b benutzt werden, um Nachrichten an den Master-Teilnehmer 2 zu übertragen.

Falls einer der Repeater-Slave-Teilnehmer 3a, 3b eine Nachricht an den Master-Teilnehmer 2 über den zweiten Nachrichtenzeitschlitz 12 übertragen will, kann für diese Übertragung insbesondere der zweite Nachrichtenzeitschlitz 12 des unmittelbar folgenden Kommunikationszeitschlitzes verwendet werden. Alternativ ist es ebenfalls möglich, den zweiten Nachrichtenzeitschlitz 12 eines folgenden R-ten Kommunikationszeitschlitzes zu verwenden, wobei R eine natürliche Zahl mit R ≥ 1 ist. Dabei ist es bevorzugt, R unter Verwendung einer geeigneten Obergrenze nach dem Zufallsprinzip auszuwählen.

Hat der Master-Teilnehmer 2 die über den zweiten Nachrichtenschlitz 12 übertragene Nachricht empfangen, so bestätigt der Master-Teilnehmer 2 dem Repeater-Slave-Teilnehmer 3a oder 3b, der diese Nachricht gesendet hat, den Empfang. Die Bestätigung kann durch die Übertragung einer geeigneten Nachricht im folgenden Kommunikationszeitschlitz zwischen dem Master-Teilnehmer 2 und dem Repeater-Slave-Teilnehmer 3a, 3b, der diese Nachricht gesendet hat, erfolgen, insbesondere in einem Management-Nachrichtenzeitfenster (MMS - Management Message-Slot), wie an späterer Stelle näher erläutert wird.

Bei Ausbleiben der Bestätigung versucht dieser Repeater-Slave-Teilnehmer 3a, 3b erneut, die Nachricht in dem zweiten Nachrichtenschlitz 12 eines folgenden Kommunikationszeitschlitzes zu übertragen. Der Repeater-Slave-Teilnehmer 3a, 3b kann nach Ausbleiben der Bestätigung diese Nachricht in einem unmittelbar folgenden Kommunikationszeitschlitz den zweiten Nachrichtenzeitschlitz 12 nutzen, um diese Nachricht erneut an den ersten Teilnehmer zu übermitteln. Alternativ kann auch der zweite Nachrichtenzeitschlitz des R-ten Kommunikationszeitschlitzes benutzt werden, wobei R eine nach dem Zufallsprinzip ausgewählte natürliche Zahl mit R ≥ 1 und R < K mit K > 1 ist. Bei erneutem Fehlschlagen der Übertragung dieser Nachricht kann dieses Verfahren wiederholt werden. Vorzugsweise wird der Wert K für jeden weiteren Übertragungsversuch erhöht. Beispielsweise ist K eine Folge der Werte 1, 5, 10, 20, 40, ... . Durch diese Erhöhung erfolgt eine Spreizung über die Zeit. Dies ist vorteilhaft für den Fall, dass viele zweite Teilnehmer gleichzeitig versuchen, Nachrichten mittels des zweiten Nachrichtenzeitschlitzes zu übertragen, um eine gegenseitige Blockierung dieser Teilnehmer zu verhindern.

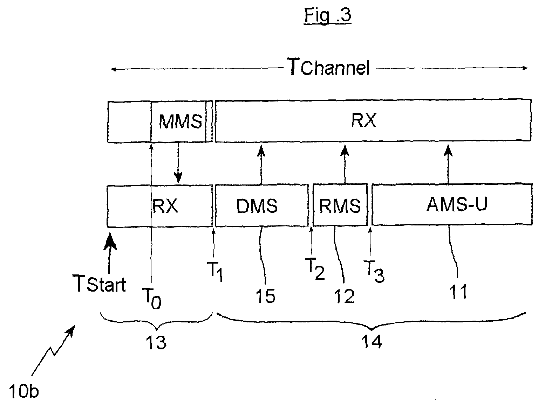

Die Fig. 3 zeigt eine zweite Ausführungsform eines Kommunikationszeitschlitzes 10b. Der zweite Kommunikationszeitschlitz 10b ist entsprechend dem ersten Kommunikationszeitschlitz 10a in einen Sendezeitschlitz 13 und einen Empfangszeitschlitz 14 unterteilt. Der Sendezeitschlitz 13 ist verkürzt, beispielsweise weil beim Master-Teilnehmer 2 keine Nachricht vorliegt, die er an einen Repeater-Slave-Teilnehmer 3a, 3b zu übertragen hat. Der Sendezeitschlitz 13 kann in diesem Falle dafür genutzt werden, um andere Informationen, beispielsweise Netzwerkmanagement-Informationen, zu übertragen.

Im Rahmen eines Management-Nachrichtenzeitfensters (MMS - Management Message-Slot) kann insbesondere der Master-Teilnehmer 2 einem Repeater-Slave-Teilnehmer 3a, 3b bestätigen, dass eine von dem Repeater-Slave-Teilnehmer 3a, 3b in dem zweiten Nachrichtenschlitz 12 gesendete Nachricht vom Master-Teilnehmer 2 empfangen wurde. Die Bestätigung kann aber auch als Teil einer anderen Nachricht oder als eigene Nachricht an den Repeater-Slave-Teilnehmer 3a, 3b übermittelt werden.

Der Empfangszeitschlitz 14 umfasst neben dem ersten Nachrichtenzeitschlitz 11 und dem zweiten Nachrichtenzeitschlitz 12 einen dritten Nachrichtenzeitschlitz 15 (DMS - Deterministic-Message-Slot). Der dritte Nachrichtenzeitschlitz 15 ist demjenigen Repeater-Slave-Teilnehmer 3a, 3b zugeordnet, dem der erste Nachrichtenzeitschlitz 11 zugeordnet ist.

Alternativ kann der Kommunikationszeitschlitz 10a und der Kommunikationszeitschlitz 10b auch einem Parent, beispielsweise einem der Repeater-Slave-Teilnehmer 3a, 3b, und seinen Children, beispielsweise Slave-Teilnehmer 4a und Repeater-Slave 4b bzw. Repeater-Slave-Teilnehmer 4c und Slave-Teilnehmer 4d, zugeordnet sein. Obige Ausführungen für den Master-Teilnehmer 2 und die Repeater-Slave-Teilnehmer 3a, 3b gelten entsprechend.

### Bezugszeichenliste

- Netzwerk: 1
- Master-Teilnehmer: 2
- Repeater-Slave-Teilnehmer: 3a, 3b, 4b, 4c, 5
- Slave-Teilnehmer: 4a, 4d
- Nachrichtenübertragungseinrichtung: 6
- Kommunikationszeitschlitz: 10a, 10b
- Erster Nachrichtenzeitschlitz: 11
- Zweiter Nachrichtenzeitschlitz: 12
- Sendezeitschlitz: 13
- Empfangszeitschlitz: 14
- Dritter Nachrichtenzeitschlitz: 15

## Patentansprüche

1. Netzwerk (1), umfassend mindestens einen ersten Teilnehmer (2) und mindestens zwei mit dem ersten Teilnehmer (2) über eine Nachrichtenübertragungseinrichtung (6) verbundene zweite Teilnehmer (3a, 3b), wobei
das Netzwerk derart eingerichtet ist, dass eine Kommunikation zwischen dem ersten Teilnehmer (2) und den zweiten Teilnehmern (3a, 3b) in einem Kommunikationszeitschlitz (10a, 10b) erfolgt und der erste Teilnehmer (2) die mindestens zwei zweiten Teilnehmer (3a, 3b) gemäß eines Polling-Verfahrens kontaktiert und die mindestens zwei zweiten Teilnehmer (3a, 3b) in einem festgelegten zeitlichen Abstand, der den Kommunikationszeitschlitz (10a, 10b) definiert, pollt, wobei
in dem Kommunikationszeitschlitz (10a, 10b) Daten zwischen dem ersten Teilnehmer (2) und den zweiten Teilnehmern (3a, 3b) übertragbar sind, wobei
der Kommunikationszeitschlitz (10a, 10b) mindestens einen ersten Nachrichtenzeitschlitz (11) und einen zweiten Nachrichtenzeitschlitz (12) aufweist, und wobei
der erste Nachrichtenzeitschlitz (11) durch einen ausgewählten zweiten Teilnehmer (3a, 3b) zum Übertragen einer Nachricht an den ersten Teilnehmer (2) nutzbar ist und der zweite Nachrichtenzeitschlitz (12) von mehreren zweiten Teilnehmern (3a, 3b) zum Übertragen einer Nachricht an den ersten Teilnehmer (2) nutzbar ist.

2. Netzwerk nach Anspruch 1, wobei beim Vorliegen einer an den ersten Teilnehmer (2) zu übertragenden Nachricht bei einem zweiten Teilnehmer dieser zweite Teilnehmer (3a, 3b) in einem unmittelbar folgenden Kommunikationszeitschlitz (10a, 10b) oder in einem folgenden R-ten Kommunikationszeitschlitz (10a, 10b), wobei R eine nach dem Zufallsprinzip ausgewählte natürliche Zahl mit R>=1 ist, den zweiten Nachrichtenzeitschlitz (12) nutzt, um diese Nachricht an den ersten Teilnehmer (2) zu übermitteln.

3. Netzwerk nach einem der vorhergehenden Ansprüche, wobei der erste Teilnehmer (2) dem zweiten Teilnehmer (3a, 3b) bestätigt, dass eine vom zweiten Teilnehmer (3a, 3b) an den ersten Teilnehmer (2) im zweiten Nachrichtenschlitz (12) übertragene Nachricht vom ersten Teilnehmer (2) empfangen wurde.

4. Netzwerk nach Anspruch 3, wobei bei Ausbleiben der Bestätigung dieser zweite Teilnehmer (3a, 3b) erneut versucht, die Nachricht in dem zweiten Nachrichtenschlitz (12) eines folgenden Kommunikationszeitschlitzes (10a, 10b) zu übertragen.

5. Netzwerk nach Anspruch 4, wobei der zweite Teilnehmer (3a, 3b) bei Ausbleiben der Bestätigung die Nachricht in einem unmittelbar folgenden Kommunikationszeitschlitz (10a, 10b) oder in einem folgenden R-ten Kommunikationszeitschlitz (10a, 10b), wobei R eine nach dem Zufallsprinzip ausgewählte natürliche Zahl mit R>=1 und R<K mit K>1, ist, den zweiten Nachrichtenzeitschlitz (12) nutzt, um diese Nachricht an den ersten Teilnehmer (2) zu übermitteln.

6. Netzwerk nach Anspruch 5, wobei der Wert K für jede weitere Übertragung erhöht wird.

7. Netzwerk nach einem der vorhergehenden Ansprüche, wobei die Auswahl des zweiten Teilnehmers (3a, 3b), für den der erste Nachrichtenschlitz nutzbar ist, nach einem deterministischen Verfahren erfolgt.

8. Netzwerk nach Anspruch 7, wobei gemäß dem deterministischen Verfahren eine Reihenfolge festgelegt ist, nach der nacheinander jeder der zweiten Teilnehmer (3a, 3b) für die Nutzung des ersten Nachrichtenzeitschlitzes (11) von aufeinander folgenden Kommunikationszeitschlitzen (10a, 10b) ausgewählt wird.

9. Netzwerk nach einem der vorhergehenden Ansprüche, wobei der Kommunikationszeitschlitz (10a, 10b) einen Sendezeitschlitz (13) und einen Empfangszeitschlitz (14) umfasst, wobei im Sendezeitschlitz (13) der erste Teilnehmer (2) eine Nachricht übertragen kann und die zweiten Teilnehmer (3a, 3b) eine Nachricht empfangen können, und im Empfangszeitschlitz (14) der erste Teilnehmer (2) eine Nachricht empfangen kann und die zweiten Teilnehmer (3a, 3b) eine Nachricht übertragen können, wobei der erste Nachrichtenzeitschlitz (11) und der zweite Nachrichtenzeitschlitz (12) Bestandteil des Empfangszeitschlitzes (14) sind.

10. Netzwerk nach einem der vorhergehenden Ansprüche, wobei der erste Teilnehmer (2) ein Master ist, und die zweiten Teilnehmer (3a, 3b) Slaves und/oder Repeaterslaves sind.

11. Netzwerk nach einem der vorhergehenden Ansprüche, wobei das Netzwerk (1) als Baumstruktur strukturiert ist.

12. Netzwerk nach einem der vorhergehenden Ansprüche, wobei das Netzwerk (1) als Funknetzwerk ausgebildet ist, der erste Teilnehmer (2) und die zweiten Teilnehmer (3a, 3b) Funkstationen sind, und die Nachrichtenübertragung mittels Funkwellen erfolgt.

## Claims

1. A network (1) comprising at least one first node (2) and at least two second nodes (3a, 3b) connected to the first node (2) by a message transmission device (6), wherein
the network is configured such that there is communication between the first node (2) and the second nodes (3a, 3b) in a communication time slot (10a, 10b), and the first node (2) contacts the at least two second nodes (3a, 3b) in accordance with a polling method and polls the at least two second nodes (3a, 3b) in a fixed time interval, which defines the communication time slot (10a, 10b), wherein data can be transmitted between the first node (2) and the second nodes (3a, 3b) in the communication time slot (10a, 10b), wherein
the communication time slot (10a, 10b) has at least one first message time slot (11) and one second message time slot (12), and wherein
the first message time slot (11) can be used by a selected second node (3a, 3b) to transmit a message to the first node (2) and the second message time slot (12) can be used by a plurality of second nodes (3a, 3b) to transmit a message to the first node (2).

2. The network according to Claim 1, wherein, when a message to be transmitted to the first node (2) is present at a second node, said second node (3a, 3b) in an immediately subsequent communication time slot (10a, 10b) or in a subsequent R^{th} communication time slot (10a, 10b), wherein R is a randomly selected integer and R≧1, uses the second message time slot (12) to transmit this message to the first node (2).

3. The network according to one of the preceding claims, wherein the first node (2) confirms to the second node (3a, 3b) that a message transmitted by the second node (3a, 3b) to the first node (2) in the second message time slot (12) was received by the first node (2).

4. The network according to Claim 3, wherein, in the absence of confirmation, this second node (3a, 3b) again attempts to transmit the message in the second message time slot (12) of a subsequent communication time slot (10a, 10b).

5. The network according to Claim 4, wherein the second node (3a, 3b), in the absence of confirmation of the message in an immediately subsequent communication time slot (10a, 10b) or in a subsequent R^{th} communication time slot (10a, 10b), wherein R is a randomly selected integer with R≧1 and R<K with K>1, uses the second message time slot (12) to transmit this message to the first node (2).

6. The network according to Claim 5, wherein the value K is increased for each additional transmission.

7. The network according to one of the preceding claims, wherein the selection of the second node (3a, 3b) for which the first message time slot can be used is performed using a deterministic process.

8. The network according to Claim 7, wherein an order is set in accordance with the deterministic process and each of the second nodes (3a, 3b) is selected in accordance with said order for the use of the first message time slot (11) of successive communication time slots (10a, 10b).

9. The network according to one of the preceding claims, wherein the communication time slot (10a, 10b) comprises a transmission time slot (13) and a receiving time slot (14), wherein, in the transmission time slot (13), the first node (2) can transmit a message and the second nodes (3a, 3b) can receive a message, and in the receiving time slot (14) the first node (2) can receive a message and the second nodes (3a, 3b) can transmit a message, wherein the first message time slot (11) and the second message time slot (12) are part of the receiving time slot (14).

10. The network according to one of the preceding claims, wherein the first node (2) is a master, and the second nodes (3a, 3b) are slaves and/or repeater slaves.

11. The network according to one of the preceding claims, wherein the network (1) is structured as a tree structure.

12. The network according to one of the preceding claims, wherein the network (1) is formed as a wireless network, the first node (2) and the second nodes (3a, 3b) are radio stations, and the message transmission is performed by means of radio waves.

## Revendications

1. Réseau (1), comprenant au moins un premier utilisateur (2) et au moins deux deuxièmes utilisateurs (3a, 3b) reliés avec le premier utilisateur (2) par l'intermédiaire d'un système de transmission de messages (6), où
le réseau est organisé de sorte qu'une communication entre le premier utilisateur (2) et les deuxièmes utilisateurs (3a, 3b) s'effectue dans un créneau temporel de communication (10a, 10b) et le premier utilisateur (2) contacte les au moins deux deuxièmes utilisateurs (3a, 3b) selon un procédé de consultation et interroge les au moins deux deuxièmes utilisateurs (3a, 3b) avec un décalage temporel fixe qui définit le créneau temporel de communication (10a, 10b), où
des données peuvent être transmises entre le premier utilisateur (2) et les deuxièmes utilisateurs (3a, 3b) dans le créneau temporel de communication (10a, 10b), où
le créneau temporel de communication (10a, 10b) présente au moins un premier créneau temporel de messages (11) et un deuxième créneau temporel de messages (12), et où
le premier créneau temporel de messages (11) peut être utilisé par un deuxième utilisateur (3a, 3b) choisi pour la transmission d'un message au premier utilisateur (2) et le deuxième créneau temporel de messages (12) peut être utilisé par plusieurs deuxièmes utilisateurs (3a, 3b) pour la transmission d'un message au premier utilisateur (2).

2. Réseau selon la revendication 1, où, lors de l'existence d'un message chez un deuxième utilisateur à transmettre au premier utilisateur (2), ce deuxième utilisateur (3a, 3b) utilise le deuxième créneau temporel de messages (12) dans un créneau temporel de communication (10a, 10b) immédiatement consécutif ou dans un R^{ième} créneau temporel de communication (10a, 10b) consécutif, où R est un nombre naturel choisi sur un principe aléatoire avec R > = 1, afin de transmettre ce message au premier utilisateur (2).

3. Réseau selon l'une des revendications précédentes, où le premier utilisateur (2) confirme au deuxième utilisateur (3a, 3b) qu'un message transmis par le deuxième utilisateur (3a, 3b) a été reçu par le premier utilisateur (2) dans le deuxième créneau de messages (12).

4. Réseau selon la revendication 3, où, en cas d'absence de la confirmation, ce deuxième utilisateur (3a, 3b) essaye de nouveau de transmettre le message dans le deuxième créneau de messages (12) d'un créneau temporel de communication (10a, 10b) suivant.

5. Réseau selon la revendication 4, où le deuxième utilisateur (3a, 3b) utilise le deuxième créneau temporel de messages (12) en cas d'absence de confirmation de message dans un créneau temporel de communication (10a, 10b) immédiatement consécutif ou dans un R^{ième} créneau temporel de communication (10a, 10b) suivant, où R est un nombre naturel choisi selon un principe aléatoire avec R > = 1 et R < K, avec K > 1, afin de transmettre ce message au premier utilisateur (2).

6. Réseau selon la revendication 5, où, la valeur K est augmentée pour chaque nouvelle transmission.

7. Réseau selon l'une des revendications précédentes, où le choix du deuxième utilisateur (3a, 3b), pour lequel le premier créneau de messages est utilisable, est effectué selon un procédé déterministe.

8. Réseau selon la revendication 7, où, selon le procédé déterministe, un classement est fixé selon lequel chacun des deuxièmes utilisateurs (3a, 3b) est choisi pour l'utilisation du premier créneau de messages (11) de créneaux temporels de communications (10a, 10b) successifs.

9. Réseau selon l'une des revendications précédentes, où le créneau temporel de communication (10a, 10b) comprend un créneau temporel d'émission (13) et un créneau temporel de réception (14), où le premier utilisateur (2) peut transmettre un message dans le créneau temporel d'émission (13) et les deuxièmes utilisateurs (3a, 3b) peuvent réceptionner un message, et, dans le créneau temporel de réception (14), le premier utilisateur (2) peut réceptionner un message et les deuxièmes utilisateurs (3a, 3b) peuvent transmettre un message, où les premier créneau temporel de messages (11) et deuxième créneau temporel de messages (12) sont des constituants du créneau temporel de réception (14).

10. Réseau selon l'une des revendications précédentes, où le premier utilisateur (2) est un maitre, et les deuxièmes utilisateurs (3a, 3b) sont des esclaves et/ou des esclaves répéteurs.

11. Réseau selon l'une des revendications précédentes, où le réseau (1) est structuré sous forme d'une structure arborescente.

12. Réseau selon l'une des revendications précédentes, où le réseau (1) est conçu sous la forme d'un réseau radio, le premier utilisateur (2) et les deuxièmes utilisateurs (3a, 3b) sont des stations radios et la transmission des messages a lieu au moyen d'ondes radio.
